# EUROPEAN PATENT APPLICATION

(11) **EP 4 632 032 A1**
(43) Date of publication of application: **15.10.2025**
(21) Application number: 25166160.9
(22) Date of filing: 25.03.2025
(51) Int. Cl.: C09K 5/10, C23F 11/12

(54) **COOLANT COMPOSITION**

(30) Priority: 08.04.2024 JP 2024062246
(71) Applicant: CCI Corporation, Seki-shi, Gifu 501-3923 (JP); CCI Holdings Inc., Seki-shi, Gifu 501-3923 (JP)
(72) Inventor: IIJIMA, Ayami, Seki-shi, Gifu, 501-3923 (JP); YAMAMOTO, Sayaka, Seki-shi, Gifu, 501-3923 (JP)
(74) Representative: Winter, Brandl - Partnerschaft mbB

(57) **Abstract**

A coolant composition is characterized by containing a polycarboxylic acid polyalkylene glycol graft polymer.

## Description

### Background

### Field of the Invention

The present invention relates to a coolant composition.

### Description of the Related Art

Due to hard water contained in a coolant, etc., precipitates may be formed during use, etc.

In order to prevent the formation of the precipitates, it is necessary to adopt pure water instead of hard water. However, for coolants used for internal combustion engines, electric vehicles, fuel cell vehicles, etc., hard water such as tap water is usually used. Therefore, when a coolant obtained by diluting a stock solution with tap water or the like is used, components contained in hard water may become insoluble components or precipitate as the coolant is used.

Meanwhile, for the purpose of preventing the formation of precipitates, for use in coolants, compositions containing additives, etc. for stabilizing hard water described in Patent Literatures 1 to 4 below are known.

Even in the existing coolant compositions containing components for stabilizing water, components (such as magnesium and calcium) of hard water contained in water in a coolant may react with components contained in the coolant or react with carbon dioxide contained to form insoluble components or precipitates.

Furthermore, use of the existing coolant may cause a reaction between a metal surface in contact with the coolant and components of the coolant, resulting in corrosion of the metal surface.

As such insoluble components or precipitates circulate through a circuit of the coolant, clogging of a radiator, overheating, and cooling water leakage may be caused.

### Background Art Literatures

Patent Literature 1: PCT Japanese Translation Patent Publication No. 2020-514514
Patent Literature 2: PCT Japanese Translation Patent Publication No. 2020-512440
Patent Literature 3: Japanese Patent Laid-open No. 2019-137839
Patent Literature 4: Japanese Patent Laid-open No. 2016-535122

### Summary

An object is to prevent the formation of insoluble components and precipitates due to components of hard water contained in cooling water as described above, and exhibit stable cooling performance.

A coolant composition according to the present invention is as follows.
1. A coolant composition characterized by containing a polycarboxylic acid polyalkylene glycol graft polymer.

The coolant composition containing a polycarboxylic acid polyalkylene glycol graft polymer according to the present invention exhibits the effect of preventing the formation of insoluble components and precipitates due to long-term use even in the case of being diluted with water containing calcium and magnesium, such as tap water or hard water.

### Detailed Description of Embodiments

### [Polycarboxylic Acid Polyalkylene Glycol Graft Polymer]

A polycarboxylic acid polyalkylene glycol graft polymer in the present invention is an ionic water-soluble polymer.

The polycarboxylic acid polyalkylene glycol graft polymer has a structure in which a polyalkylene glycol such as polyethylene glycol, polypropylene glycol, or a polyether having an ethylene glycol unit and a propylene glycol unit is condensed to a carboxylic acid group of a polymer having carboxylic acid groups.

Examples of the polymer having carboxylic acid groups include copolymers of monomers such as an olefin, e.g., ethylene, propylene, butylene, or butadiene, styrene, an acrylic acid ester, or a methacrylic acid ester and a carboxylic acid group-containing monomer such as acrylic acid, methacrylic acid, or maleic acid; and homopolymers of a monomer having a carboxylic acid group, such as acrylic acid, methacrylic acid, or maleic acid.

The weight-average molecular weight of the polycarboxylic acid polyalkylene glycol graft polymer is not particularly limited but is preferably 5,000 to 400,000. This weight-average molecular weight is determined by a GPC method as a relative value based on a molecular weight of polystyrene.

The concentration of the polycarboxylic acid polyalkylene glycol graft polymer in the coolant composition is not limited as long as the effects of the present invention can be achieved but is preferably 0.001% by weight or higher, more preferably 0.005% by weight or higher, yet more preferably 0.01% by weight or higher. The concentration is preferably 5.0% by weight or lower, more preferably 1.0% by weight or lower, yet more preferably 0.5% by weight or lower, most preferably 0.1% by weight or lower. At a concentration of lower than 0.001% by weight, the effect of adding the polycarboxylic acid polyalkylene glycol graft polymer may not be sufficiently obtained, and at a concentration exceeding 5.0% by weight, a higher effect may not be obtained even if the polycarboxylic acid polyalkylene glycol graft polymer is further contained.

### [Base]

Ideally, a base of the coolant composition containing a polycarboxylic acid polyalkylene glycol graft polymer according to the present invention is nonfreezing. To be specific, the base is preferably one or a mixture of two or more types selected from water, alcohols, glycols, and glycol ethers.

Water is preferably, for example, ion-exchanged water, household tap water, or industrial tap water and is preferably free of metals such as alkali metals and alkaline-earth metals and halogen elements such as chlorine.

### (Glycols That May Be Contained in Base)

The aforementioned glycols include one or more types selected from ethylene glycol, propylene glycol, 1,3-propanediol, 1,3-butylene glycol, hexylene glycol, diethylene glycol, triethylene glycol, glycerin, etc., of which ethylene glycol or propylene glycol is particularly desired.

### (Alcohols That May Be Contained in Base)

The aforementioned alcohols include, for example, one or more types selected from methanol, ethanol, propanol, butanol, pentanol, hexanol, heptanol, and octanol.

### (Glycol Ethers That May Be Contained in Base)

The aforementioned glycol ethers include, for example, one or more types selected from ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

Of the aforementioned bases other than water, ethylene glycol and/or propylene glycol are/is preferred from the viewpoints of ease of handling, cost, and easy availability.

In addition, a trivalent alcohol such as glycerin, trimethylolethane, trimethylolpropane, 5-methyl-1,2,4-heptanetriol, or 1,2,6-hexanetriol can also be used.

Of the aforementioned bases, ethylene glycol and/or propylene glycol are/is preferred from the viewpoints of ease of handling, cost, and easy availability.

### (Corrosion Inhibitors)

Corrosion inhibitors may be added to the extent that doing so does not impair the effects of the present invention.

The corrosion inhibitors include any one or mixtures containing two or more types selected from phosphoric acids and/or salts thereof, aliphatic carboxylic acids and/or salts thereof, aromatic carboxylic acids and/or salts thereof, triazoles, thiazoles, silicates, nitrates, nitrites, borates, tungstates, molybdates, and amine salts, as well as sulfur-containing alcohols, sulfur-containing phenols, and amines.

The phosphoric acids and/or salts thereof include orthophosphoric acid, pyrophosphoric acid, hexametaphosphoric acid, tripolyphosphoric acid, etc., as well as alkali metal salts, or preferably sodium salts and potassium salts, thereof.

The aliphatic carboxylic acids and/or salts thereof include 2-phosphonobutane-1,2,4-tricarboxylic acid, pentanoic acid, hexanoic acid, heptanoic acid, octanoic acid, nonanoic acid, decanoic acid, 2-ethylhexanoic acid, adipic acid, suberic acid, azelaic acid, sebacic acid, undecanoic acid, dodecanoic diacid, other dicarboxylic acids, etc., as well as alkali metal salts, or preferably sodium salts and potassium salts, thereof.

The aromatic carboxylic acids and/or salts thereof include benzoic acid, toluic acid, para-tert-butylbenzoic acid, phthalic acid, para-methoxybenzoic acid, cinnamic acid, etc., as well as alkali metal salts, or preferably sodium salts and potassium salts, thereof.

The triazoles include tolyltriazole, benzotriazole, and 4-phenyl-1,2,3-triazole.

The thiazoles include mercaptobenzothiazole as well as alkali metal salts, or preferably a sodium salt and a potassium salt, thereof.

The silicates include a sodium salt and a potassium salt of metasilicic acid, as well as aqueous solution of sodium silicate commonly known as "liquid glass" and expressed by Na₂O/XSiO₂ (X = 0.5 to 3.3), the nitrates include sodium nitrate and potassium nitrate, and the nitrites include sodium nitrite and potassium nitrite. The borates include sodium tetraborate and potassium tetraborate.

The molybdates include sodium molybdate, potassium molybdate, and ammonium molybdate, while the amine salts include monoethanolamine, diethanolamine, triethanolamine, monoisopropanolamine, diisopropanolamine, and triisopropanolamine.

The sulfur-containing alcohols and sulfur-containing phenols include ethylene oxide adducts of alkyl amines, ethylene oxide adducts of alkyl diamines, 2-(methylthio)ethanol, 2-(ethylthio)ethanol, 2-(n-propylthio)ethanol, 2-(isopropylthio)ethanol, 2-(n-butylthio)ethanol, 2-(isobutylthio)ethanol, 2-(phenylthio)ethanol, 2,2'-dithiodiethanol, 2-(2-aminoethylthio)ethanol, 3-(ethylthio)propanol, 4-(methylthio)butanol, 3-(methylthio)hexanol, 2-thiophenemethanol, 3-thiophenemethanol, 2-thiopheneethanol, 3-thiopheneethanol, 4-(methylthio)-6-(hydroxymethyl)-o-cresol, methionol, DL-methioninol, L-methioninol, thiodiglycol, 6-hydroxy-1,3-benzoxathiol-2-one, 4-(methylthio)benzyl alcohol, 4,4'-thiodiphenol, 3,6-dithia-1,8-octanediol, 3,7-dithia-1,9-nonanediol, etc.

The amines include triethanolamine, diethanolamine, ethanolamine, trimethylamine, hexamethylenediamine, etc.

### (Dye)

The coolant composition according to the present invention may or may not contain a water-soluble dye. As for the water-soluble dyes that can be used, those offering excellent stability are preferred.

In the coolant composition according to the present invention, the content of any water-soluble dye, if contained, is preferably 0.0005 to 0.2% by weight, more preferably 0.001 to 0.1% by weight, or yet more preferably 0.003 to 0.02% by weight, relative to the base of the coolant composition representing 100% by weight.

If the content is under 0.0005% by weight, visually confirming the coloring becomes difficult, resulting in poor visual recognizability of the coolant composition.

### (Defoaming Agent)

The coolant composition according to the present invention may contain a defoaming agent.

The content of such defoaming agent is preferably 0.001 to 1.0% by weight, or more preferably 0.005 to 0.1% by weight, in the coolant composition.

It should be noted that the present invention is not limited to the following examples, and can be freely modified and implemented within the scope described in "What Is Claimed Is".

### (Other Additives)

Among other additives, a hydroxide of any normal alkaline material, or preferably sodium, potassium or other alkali metal salt, may be used to adjust the pH. The pH adjustment range is preferably 6.5 to 9.0, more preferably 7.0 to 9.0, or yet more preferably the pH is adjusted within a range of 7.4 to 8.5. It should be noted that as described above, a defoaming agent may be added to the coolant composition. It should be noted that cyclopentane is not contained.

To the coolant composition according to the present invention, for example, a pH adjuster such as sodium hydroxide or potassium hydroxide may be added as appropriate or may not be added. Furthermore, in addition to the substances described above, for example, an antioxidant, a rust inhibitor, a friction modifier, an anticorrosive, a viscosity index improver, a pour-point depressant, a dispersant/surfactant, an antiwear agent, a bittering agent, or a solid lubricant may be optionally contained.

A method for obtaining the coolant composition according to the present invention is not limited. The coolant composition may be obtained by mixing necessary components, or a compound that generates a component in the present invention upon heating or the like may be mixed with the base, etc., and the resulting mixture may be heated to obtain the component in the present invention.

The coolant composition according to the present invention can also be used as a coolant composition for electric vehicles, a coolant for internal combustion engines, a coolant composition for cooling fuel cells installed in fuel cell vehicles and power-generating devices, and a coolant composition for systems that include piping, a tank, and optionally a cation exchange resin, an anion exchange resin, or the like installed in fuel cells.

It should be noted that the present invention is not limited to the following examples.

### Examples

Hereinafter, a preferred Example of the coolant composition according to the present invention will be described, and the performance thereof will be evaluated in comparison with Comparative Examples. Compositions of Example and Comparative Examples shown in Table 1 each contained ion-exchanged water and ethylene glycol as a base. The measurement of the viscosity was performed in accordance with JIS K2283.

Polycarboxylic acid polyalkylene glycol graft polymer (molecular weight 3,000, viscosity 45 ± 15 mPa·s (25°C))

### Maleic acid polymer: weigh-average molecular weight 937

Sodium polyacrylate (molecular weight 5,500, viscosity 800 ± 200 mPa·s (25°C))

Acrylic acid-maleic acid copolymer sodium salt (molecular weight 50,000, viscosity of 20% aqueous solution 37 ± 7 mPa·s (25°C))

Maleic acid-based·sulfonic acid-based copolymer (viscosity 500 ± 200 mPa·s (25°C))

Acrylic acid·sulfonic acid-based monomer copolymer sodium salt (molecular weight 6,000, viscosity 1,200 ± 200 mPa·s (25°C))

Special sodium polycarboxylate (molecular weight 2,000, viscosity 290 ± 60 mPa·s (25°C))

Antirust additive: mixture of phosphoric acid, sebacic acid, p-toluic acid, tolyltriazole, and mercaptobenzothiazole

### (Hard Water Stability Test)

A coolant composition (50 mL) and hard water (50 mL) having a calcium ion concentration of 6 mmol/L were mixed. This was stored at 90°C for 336 hours. The resulting sample was centrifuged to be sufficiently subjected to solid-liquid separation, and the volume of the precipitate was measured.

### (Metal-Corroding Property Test (Change in Mass))

A metal-corroding property test was performed on the basis of ASTM D1384.

Metal pieces were each immersed in a coolant composition containing 33.3 vol% of a coolant composition and 66.7 vol% of preparation water specified in ASTM D1384 and stored at 88°C for 336 hours, and the metal pieces were then taken out and dried. The masses of each of the metal pieces before and after the immersion were measured, and a change in mass per unit surface area of the metal piece was determined. A positive value indicates an increase in mass, and a negative value indicates a decrease in mass.

### (Exterior of Test Piece)

The exterior of each of the metal pieces before and after the metal-corroding property test was sufficiently visually observed to examine a change in exterior before and after the test.

**[Table 1]**

| | | Example | Comparative Examples | | | | | | |
|---|---|---|---|---|---|---|---|---|---|
| | | | 1 | 2 | 3 | 4 | 5 | 6 | 7 |
| Polycarboxylic acid polyalkylene glycol graft polymer | | 0.02 | | | | | | | |
| Maleic acid polymer | | | | 0.07 | | | | | |
| Sodium polyacrylate | | | | | 0.05 | | | | |
| Acrylic acid-maleic acid copolymer sodium salt | | | | | | 0.16 | | | |
| Maleic acid-based·sulfonic acid-based copolymer | | | | | | | 0.07 | | |
| Acrylic acid·sulfonic acid-based monomer copolymer sodium salt | | | | | | | | 0.05 | |
| Special sodium polycarboxylate | | | | | | | | | 0.05 |
| Antirust additive | | Remainder | | | | | | | |
| Potassium hydroxide | | Amount required to neutralize to pH 7.9 at 50 vol% | | | | | | | |
| Ion-exchanged water | | 48 | | | | | | | |
| Ethylene plycol | | 48 | | | | | | | |
| Total | | 100 | | | | | | | |
| Hard water stability mL | | 0.05 | 0.55 | < 0.05 | 0.05 | < 0.05 | < 0.05 | < 0.05 | < 0.05 |
| Metal-corroding property (Change in mass mg/cm²) | Aluminum (Al) casting | 0.00 | 0.01 | -0.01 | -0.04 | -0.10 | -0.07 | -0.06 | -0.05 |
| | Cast iron | 0.02 | -0.10 | -0.07 | 0.03 | -0.07 | -0.03 | -0.06 | -0.06 |
| | Steel | 0.01 | -0.08 | -0.09 | -0.01 | -0.02 | -0.04 | -0.09 | -0.05 |
| | Brass | 0.00 | -0.03 | -0.03 | -0.05 | -0.05 | -0.03 | -0.06 | -0.06 |
| | Solder | -0.07 | -0.09 | -0.25 | -0.59 | -0.66 | -0.59 | -0.39 | -0.34 |
| | Copper | -0.01 | -0.02 | -0.03 | -0.01 | -0.03 | -0.01 | -0.01 | 0.00 |
| Test piece exterior | | No discoloration is found | | | Discoloration is found in Al casting, cast iron, and solder | | | Discoloration is found in Al casting and solder | Discoloration is found in Al casting, cast iron, and solder |

Example, which was an example conforming to the present invention, achieved excellent hard water stability and an extremely small corroding property (amount of change in mass) to each of the metals. In addition, discoloration of surfaces of the metals was also not caused.

In contrast to this, Comparative Example 1, which contained no polycarboxylic acid polyalkylene glycol graft polymer, and Comparative Examples 2 to 7 had a poor corroding property to each of the metals, and furthermore, Comparative Examples 3 to 7 caused discoloration of surfaces of the metals after the test.

## Claims

1. A coolant composition **characterized by** comprising a polycarboxylic acid polyalkylene glycol graft polymer.
